# EUROPEAN PATENT SPECIFICATION

(11) **EP 1 942 295 B1**
(45) Date of publication and mention of the grant of the patent: **08.06.2011**
(21) Application number: 07023555.1
(22) Date of filing: 05.12.2007
(51) Int. Cl.: F16K 15/20, F16K 17/04

(54) **Floating lifter pressure relief valve**
Schwimmendes Heberdruck-Ablassventil
Clapet de décharge à poussoir flottant

(30) Priority: 05.01.2007 US 878802 P; 19.09.2007 US 857829
(43) Date of publication of application: 09.07.2008
(73) Proprietor: Goodrich Corporation, Charlotte, NC 28217 (US)
(72) Inventor: Matsch, Gary, Phoenix, Arizona 85044 (US)
(74) Representative: Hess, Peter K. G.

(56) References cited:
- GB-A- 527 919
- US-A- 2 364 812
- US-A- 2 401 237
- US-A- 2 744 469

## Description

### CROSS-REFERENCE TO RELATED APPLICATION

The application claims priority of provisional application no. 60/878,802 filed January 5, 2007.

### BACKGROUND OF THE INVENTION

This invention relates to emergency evacuation equipment for aircraft, in particular to inflatable emergency evacuation slides.

Current state of the art emergency evacuation slide systems comprise an inflatable evacuation slide that is stored in a folded, uninflated state together with a source of inflation gas inside a compartment often referred to as a packboard. The source of inflation gas typically comprises a hybrid inflator, which utilizes a compressed gas stored in a pressure vessel together with a pyrotechnic gas generator. The pyrotechnic gas generator augments the stored compressed gas by providing additional gas as well as heat to counteract effects of expansion-induced cooling of the compressed gas as it expands out of the pressure vessel and into the inflatable emergency evacuation slide.

Inflatable emergency evacuation slides must operate reliably over a wide ambient temperature range, typically from -53.9°C to 71.1°C (-65° F to +160° F). The amount of gas available must be enough to pressurize the evacuation slide at the coldest temperature. Because of the relationship between pressure and temperature within a fixed volume, however, as the ambient temperature rises above the minimum, the pressure of the stored inflation gas rises proportionately. Accordingly, at higher temperatures, the inflation system produces substantially more gas than is necessary to inflate the evacuation slide. To prevent over pressurization and possible rupturing of the inflatable evacuation slide, provisions must be made to vent the excess inflation gas.

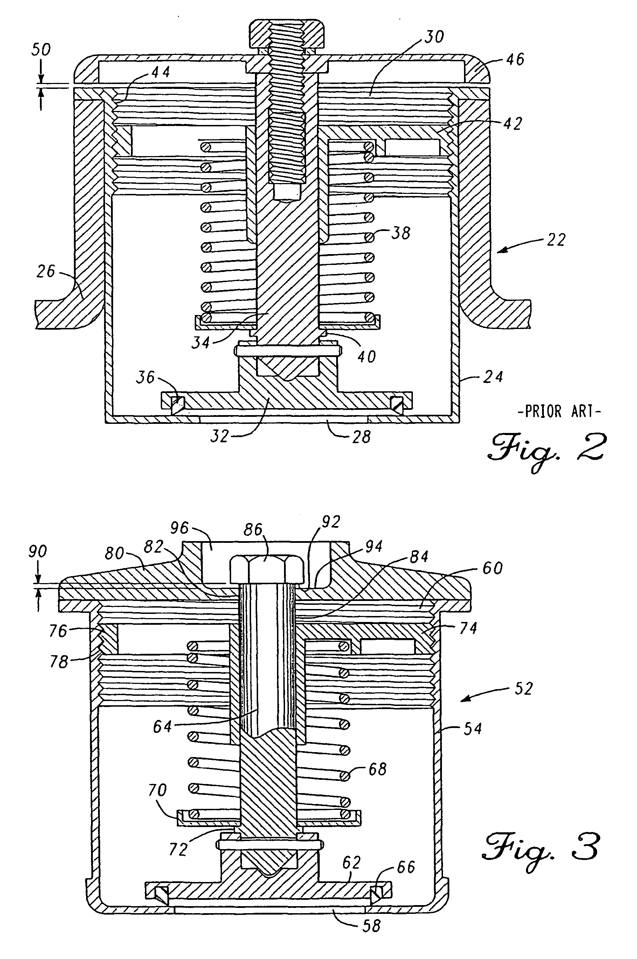

A conventional method of venting the excess inflation gas is to provide several pressure relief valves in the inflatable slide itself. These pressure relief valves must open at a precise pressure to ensure that the inflatable evacuation slide is neither underinflated nor overinflated. The pressure relief valve itself must be as lightweight as possible and occupy a minimum amount of volume within the packboard. It also must withstand the substantial packing loads exerted on it as a result of the evacuation slide being stored within the tight confines of the packboard. A pressure relief valve according to the preamble of claim 1 is known from figure 2 of the present drawings.

Such conventional fixed-lifter pressure relief valves have a drawback in that packing loads exerted on the lifter can cause deformation of the valve poppet seal. This deformation can lead to leakage of the valve and premature opening of the pressure valve during inflation of the slide. Accordingly, what is needed is a simple and reliable pressure relief valve that maintains its integrity and operating pressure in spite of the severe packing loads exerted on the pressure relief valve body. This need is fulfilled by a relief valve as defined in claim 1.

### SUMMARY OF THE INVENTION

The present invention comprises an inflatable evacuation slide having a pressure relief valve in at least one of the inflatable support tubes that support the inflatable evacuation slide. According to an illustrative embodiment, the pressure relief valve has a "floating" lifter that slidingly engages the valve stem of the poppet valve portion of the pressure relief valve. Because the lifter floats on the valve stem, the lifter cannot load the poppet valve in compression. When the poppet valve opens, however, air pressure acting on the lifter causes the lifter to engage a stop at the end of the valve stem. This enables the lifter to fully open the poppet to prevent it from chattering. In the illustrative embodiment, the lifter includes a recess that is deeper than the height of the stop at the end of the valve stem. The recess protects the valve stem from any direct compressive loads on the end of the valve stem.

### BRIEF DESCRIPTION OF THE DRAWING

The present invention will be better understood from a reading of the following detailed description taken in conjunction with the accompanying drawing figures in which like references designate like elements and, in which:
FIG. 1 is a side view of an inflatable evacuation slide incorporating features of the present invention;
FIG. 2 is a cross-sectional view of a prior art pressure relief valve;
FIG. 3 is a cross-sectional view of a pressure relief valve incorporating features of the present invention with the lifter portion seated against the valve body;
FIG. 4 is a cross-sectional view of the pressure relief valve of FIG. 3 with the lifter engaging the stop at the end of the valve stem; and
FIG. 5 is an exploded perspective view of the pressure relief valve of FIGS. 3 and 4.

### DETAILED DESCRIPTION

The drawing figures are intended to illustrate the general manner of construction and are not necessarily to scale. In the detailed description and the drawing figures, specific illustrative examples are shown and herein described in detail. It should be understood, however, that the drawing figures and detailed description are not intended to limit the invention to the particular form disclosed, but are merely illustrative and intended to teach one of ordinary skill how to make and/or use the invention claimed herein and for setting forth the best mode for carrying out the invention.

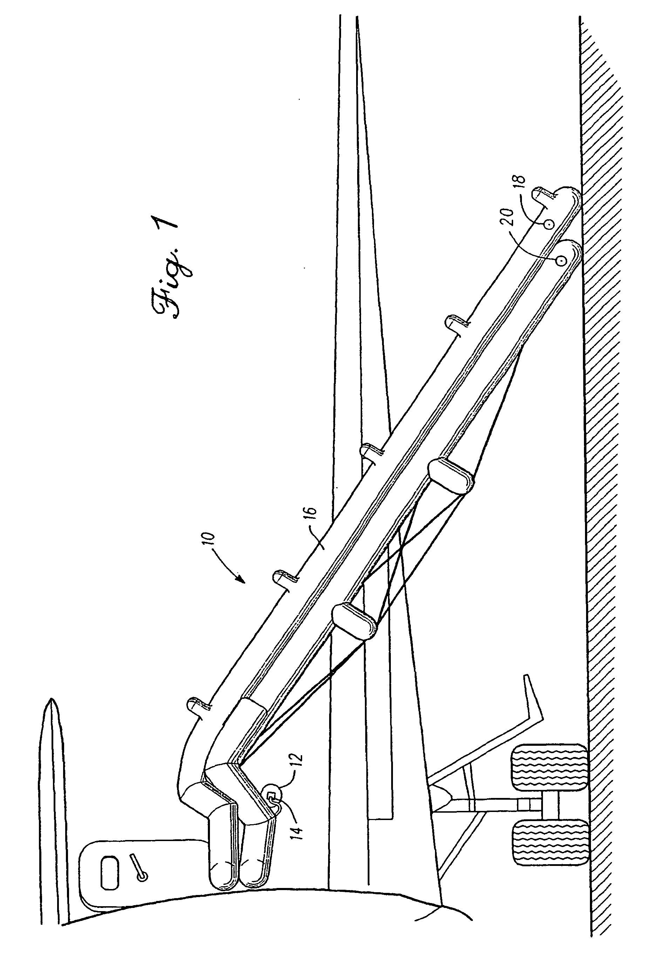

With reference to FIG. 1, an inflatable evacuation slide system **10** incorporating features of the present invention comprises a pressure vessel **12** containing a pressurized inflation gas, a control valve **14** and an inflatable evacuation slide **16.** Evacuation slide system 10 is stored in an uninflated condition within a compartment known as a packboard, which is secured within a recess in the aircraft fuselage, attached to the inside surface of an exit door or otherwise secured within the confines of the aircraft. In normal operation, the opening the aircraft emergency evacuation exit in the armed condition causes a signal to be sent to the control valve **14** causing control valve **14** to open allowing inflation gas to flow from pressure vessel **12** into inflatable evacuation slide **16.** Simultaneously the gas generator within the pressure vessel (not shown) is initiated to augment and heat the stored inflation gas flowing out of pressure vessel **12.** As noted hereinbefore, when evacuation slide system **10** is initiated at an elevated temperature, substantial excess inflation gas is produced due to the combined thermal effects of the ambient temperature and the pyrotechnic gas generator. Accordingly, to vent the excess inflation gas, inflatable evacuation slide **16** is provided with one or more pressure relief valves **18** and **20,** which open at a predetermined pressure range typically about 2.5 to 3.0 psig.

As shown in FIG. 2, a prior art pressure relief valve 22 comprises a valve body **24** that is sealed to a flange **26** formed in the inflatable evacuation slide so that the inlet aperture **28** is in fluid communication with the interior volume of the inflatable evacuation slide while the exhaust aperture **30** is open to the atmosphere. A poppet valve consisting of a valve member **32,** valve stem **34** and elastomeric seal **36** seals inlet aperture **28** against the internal pressure within the interior volume of the evacuation slide. Sealing pressure is provided by a valve spring **38** which is captive between a boss **40** formed on valve stem **34** and spring seat **42.** The relief pressure is adjusted by means of a threaded engagement **44** between spring seat **42** and valve body **24** which is employed to adjust the length and therefore the compression of valve spring **38** by moving spring seat toward and away from valve member **32.**

In order to prevent chattering of the poppet valve during operation, prior art pressure relief valve **22** includes a lifter **46,** which is rigidly attached to valve stem **34.** Because the area of lifter **46** is greater than the area of valve member **32,** once valve member **32** opens, air rushing past valve member **32** causes lifter **46** to fully unseat valve member **32** until the pressure acting on valve member **32** drops below the threshold. This built-in hysteresis reduces chattering of the valve member **32** during operation.

Lifter **46** of prior art valve **22** is spaced apart from valve body **24** by a precisely controlled gap **50** of approximately 0,13 mm (0.005 inches). This gap is necessary to ensure that thermal expansion of valve body **24** or settling of the elastomeric seal **36** will not cause lifter **46** to open valve member **32** prematurely. Unfortunately, however, packing loads caused by the inflatable evacuation slide system being forced into a packboard compartment causes lifter **46** to be pressed against valve body **24** until gap **50** is closed entirely. Further deformation of lifter **46** places excessive compressive loads on elastomeric seal **36.** This causes elastomeric seal **36** to take a permanent compression set, leading to unreliable operation.

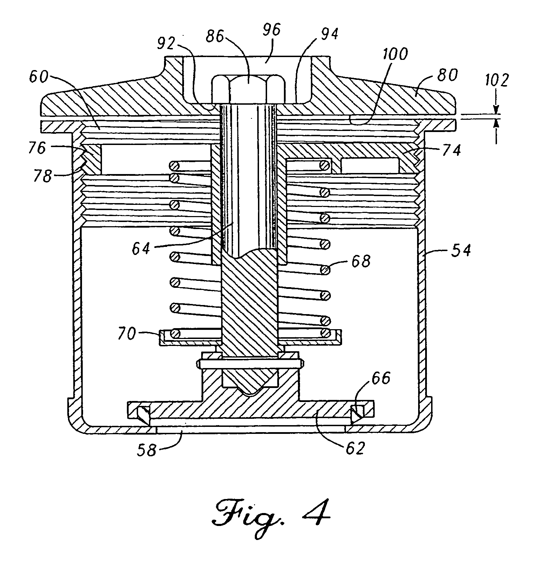

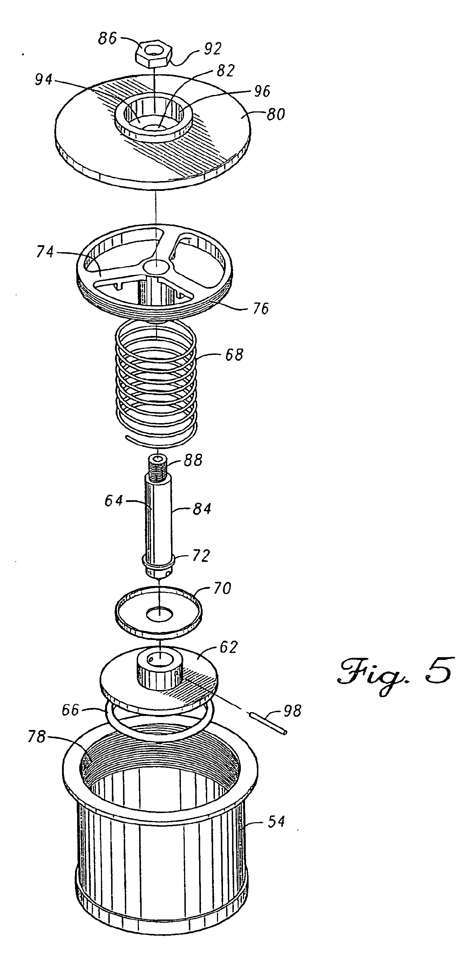

With reference to FIGS. 3-5, a "floating lifter" pressure relief valve **52** incorporating features of the present invention comprises a valve body **54** which is secured to a flange (not shown) so that the inlet aperture **58** is in fluid communication with the interior volume of the inflatable evacuation slide and the exhaust aperture **60** vents to the atmosphere. As with the prior art pressure relief valve, inlet aperture **58** is sealed by means of a poppet valve assembly consisting of a valve member **62,** which is rigidly attached to a valve stem **64,** for example by a roll pin **98.** The poppet valve assembly further includes an elastomeric seal **66** mounted in valve member **62** and pressed against inlet aperture **58** by means of a valve spring **68.** Valve spring **68** is captive between a spring cup **70** which rides on a boss **72** formed on a valve stem **64** and a spring seat **74.** Male threads **76** formed on spring seat **74** engaged female threads **78** formed in valve body **54** to enable the compression of valve spring **68** to be adjusted.

Pressure relief valve **52** further includes a lifter member **80** which comprises a disk-shaped body having a central aperture **82** that slidingly engages the outer diameter **84** of valve stem **64.** Because lifter member **80** slidingly engages valve stem **64,** it is incapable of exerting a compressive force on elastomeric seal **66** no matter how much it deforms under packing loads. Lifter member **80** performs its lifting function, however, by engaging a stop member **86** such as a stop nut threaded onto the end **88** of valve stem **64.**

In order to prevent thermal expansion of valve body **54** or settling of the elastomeric seal **66** from causing premature opening of valve member **62,** a precise gap **90** of 0,05 to 0,09 cm ( 0.020 to 0.035 inches) is maintained between the lower surface **92** of stop member **86** and the upper surface **94** of the recess **96** formed in lifter member **80.** As can be determined from Fig. 3, recess **96** is deeper than the combination of gap **90** and the height of stop member **86.** This ensures that packing loads cannot act directly on stop member **86** to compress elastomeric seal **66.**

In operation, as valve member **62** begins to open, air pressure flowing through inlet aperture **58** into the interior of valve body **54** acts on the lower surface **100** of lifter member **80.** This air pressure causes lifter member **80** to move axially outward until it engages the lower surface **92** of stop member **86.** In doing so, gap **90** is reduced to zero and a new gap **102** forms between lifter member **80** and valve body **54.** Additional air flowing into inlet aperture **58** causes lifter member **80** to press against stop member **86,** which in turn causes it to displace valve stem **64** and with it valve member **62** axially away from inlet aperture **58.** As can be determined from the foregoing, by providing a sliding engagement between lifter member **80** and valve stem **64,** lifter member **80** floats on valve stem **64** and thus is incapable of compressively elastomeric seal **66.** At the same time, providing a stop member that engages lifter member **80** as it moves away from inlet aperture **58** enables lifter member **80** to perform its function of opening valve member **62** when the pressure within the inflatable evacuation slide exceeds the predetermined threshold.

Although certain illustrative embodiments and methods have been disclosed herein, it will be apparent from the foregoing disclosure to those skilled in the art that variations and modifications of such embodiments and methods may be made without departing from the scope of the invention. Accordingly, it is intended that the invention shall be limited only to the extent required by the appended claims and the rules and principles of applicable law.

## Claims

1. A pressure relief valve (52) comprising:
a valve body (54) having a inlet aperture (58) and a exhaust aperture (60) for venting outside said valve body (54), the inlet aperture (58) including a valve seat;
a poppet comprising a valve stem (64) having a first end and a second end having a first valve member (62) attached thereto, said first valve member (62) having a front, face for sealingly engaging said valve seat, said poppet being moveable axially along an axis of said valve stem (64) from a closed position in which a first valve member sealing (66) engages said valve seat to an open position in which said first valve member (62) is displaced axially away from said valve seat;
a valve spring (68) urging said poppet into said closed position;
a lifter member (80) being connected with said first end of said valve stem (64);
**characterized in that**
said lifter member (80) slidingly engages said first end of said valve stem (64);
said lifter member (80) has a front face and is movable from a first position in which said front face contacts said exhaust aperture (60), to a second position in which said lifter member (80) is spaced apart from said exhaust aperture (60) and engages a stop member (86) on the first end of the valve stem (64);and
said lifter member (80) is further moveable to a third position in which said lifter member (80) presses against the stop member (86) and displaces said valve stem (64) axially away from said valve seat.

2. The pressure relief valve of claim 1, wherein:
said inlet aperture (58) is smaller in area than said exhaust aperture (60).

3. The pressure relief valve of claim 1, wherein:
said lifter member (80) is spaced apart from said exhaust aperture (60) a distance of 0,05 to 0,09 cm (0.020 to 0.035 inches) in said second position.

4. The pressure relief valve of claim 1, wherein:
said stop member (86) comprises a threaded fastener moveable along said valve stem (64), whereby said lifter member (80) is spaced apart from said exhaust aperture (60) in said second position by a variable distance.

5. The pressure relief valve of claim 1, wherein,
said first valve member (62) has a resilient face.

6. The pressure relief valve of claim 1, wherein:
said lifter member has a recess (96) formed in the upper surface thereof.

7. The pressure relief valve of claim 1, wherein
said lifter member (80) comprises a disk shaped member having a central aperture and an upper surface, said valve stem passing through said central aperture and terminating in a stop member (86), said stop member having a lower surface (92), the lower surface (92) of said stop member (86) and the upper surface of said lifter member defining a predetermined gap (90).

8. The pressure relief valve of claim 7, wherein:
said stop member (86) has a thickness dimension and lifter member (80) has a recess (96) formed in the upper surface thereof, said recess (96) having a depth at least equal to the thickness dimension of said stop member (86) plus said predetermined gap (90), whereby said stop member (86) is at all times fully contained within said recess (96).

9. An inflatable evacuation slide (16) comprising a plurality of inflatable support tubes adapted to be deployed from an elevated supporting surface to a lower supporting surface, comprising a pressure relief valve (52) according one of the claims 1-8 attached to an opening in at least one of said plurality of inflatable support tubes such that said inlet aperture (58) opens into said one of said plurality of inflatable support tubes.

10. Inflatable evacuation slide according claim 9, which is packed into a compartment prior to deployment, whereby said evacuation slide applying compressive load to said pressure relief valve (52).

## Patentansprüche

1. Druckbegrenzungsventil (52) aufweisend
einen Ventilkörper (54), der eine Eintrittsöffnung (58) und eine Ausströmöffnung (60) besitzt, um aus dem Ventilkörper (54) herauszublasen, wobei die Eingangsöffnung (58) einen Ventilsitz beinhaltet;
einen Kolben aufweisend einen Ventilschaft (64), der ein erstes Ende und ein zweites Ende mit einem ersten Ventilelement (62), welches hieran befestigt ist, besitzt, wobei das erste Ventilelement (62) eine Frontfläche zum dichtenden Eingriff mit besagtem Ventilsitz besitzt, wobei besagter Kolben axial entlang einer Achse von besagtem Ventilschaft (64) beweglich ist von einer geschlossenen Position, in welcher eine Dichtung (66) des ersten Ventilelements besagten Ventilsitz berührt, zu einer offenen Position, in der das erste Ventilelement (62) axial von besagtem Ventilsitz verschoben ist;
eine Ventilfeder (68), welche den Kolben in die besagte geschlossene Position drängt;
ein Hubelement (80) welches mit dem ersten Ende des Ventilschaftes (64) verbunden ist;
**dadurch gekennzeichnet, dass**
besagtes Hubelement (80) gleitend mit dem ersten Ende des Ventilschaftes (64) in Eingriff steht;
besagtes Hubelement (80) eine Frontfläche besitzt und beweglich ist von einer ersten Position, in welcher die Frontfläche die Austrittsöffnung (60) berührt, hin zu einer zweiten Position, in welcher sich das Hubelement (80) beabstandet von der Austrittsöffnung (60) befindet und mit einem Anschlagselement (86) an dem ersten Ende des Ventilschaftes (64) in Eingriff steht; und
besagtes Hubelement (80) weiterhin beweglich ist hin zu einer dritten Position in welcher besagtes Hubelement (80) gegen das Anschlagselement (86) drückt und den Ventilschaft (64) axial vom besagten Ventilsitz verschiebt.

2. Druckbegrenzungsventil gemäß Anspruch 1, wobei:
die Eintrittsöffnung (58) von der Fläche her kleiner ist als die Ausströmöffnung (60.

3. Druckbegrenzungsventil gemäß Anspruch 1, wobei:
besagtes Hubelement (80) von der Ausströmöffnung (60) in der zweiten Position mit einem Abstand von 0,05 bis 0,09 cm (0,020 bis 0,035 inches) beabstandet ist.

4. Druckbegrenzungsventil gemäß Anspruch 1, wobei:
besagtes Anschlagselement (86) eine entlang des Ventilschaftes (64) bewegliche Befestigungsschraube umfasst, wobei das Hubelement (80) von der besagten Ausströmöffnung (60) in der zweiten Position mit einem variablen Abstand beabstandet ist.

5. Druckbegrenzungsventil gemäß Anspruch 1, wobei:
besagtes erstes Ventilelement (62) eine nachgiebige Oberfläche aufweist.

6. Druckbegrenzungsventil gemäß Anspruch 1, wobei:
besagtes Hubelement eine Aushöhlung (96) besitzt, welche auf der oberen Oberfläche von diesem ausgebildet ist.

7. Druckbegrenzungsventil gemäß Anspruch 1, wobei:
besagtes Hubelement (80) ein scheibenförmiges Element aufweist mit einer mittigen Öffnung und einer oberen Oberfläche, wobei der Ventilschaft durch die mittige Öffnung hindurchtritt und in einem Anschlagselement (86) endet, wobei das Anschlagselement eine untere Oberfläche (92) besitzt, wobei diese untere Oberfläche (92) des Anschlagselements (86) mit der oberen Oberfläche des Hubelements einen vorher festgelegten Spalt (90) definiert.

8. Druckbegrenzungsventil gemäß Anspruch 7, wobei:
besagtes Anschlagselement (86) ein Dickenmaß und das Hubelement (80) eine Aushöhlung (96) besitzt, welche in der oberen Oberfläche von diesem ausgebildet ist, wobei die Aushöhlung (96) eine Tiefe mindestens gleich der Dickedimension des Anschlagelements (86) zuzüglich zu dem vordefinierten Spalt (90) aufweist, wobei sich das Anschlagselement (86) zu jeder Zeit in der besagten Aushöhlung (96) vollständig befindet.

9. Aufblasbare Evakuierungsrutsche (16) aufweisend eine Mehrzahl von aufblasbaren Unterstützungsröhren, welche angepasst sind, um ausgefahren zu werden von einer erhöhten Stützfläche auf eine niedrigere Stützfläche, aufweisend ein Druckbegrenzungsventil (52) gemäß einem der Ansprüche 1-8, welches an mindestens einer Öffnung einer aufblasbaren Unterstützungsröhre der besagten Mehrzahl von besagten aufblasbaren Unterstützungsröhren befestigt ist, so dass sich besagte Einlassöffnung (58) in mindestens eine aufblasbare Unterstützungsröhre der besagten Mehrzahl von besagten aufblasbaren Unterstützungsröhren hinein öffnet.

10. Aufblasbare Evakuierungsrutsche gemäß Anspruch 9, die vor der Entfaltung in ein Fach gepackt ist, wobei besagte Evakuierungsrutsche eine Druckbelastung auf besagtes Druckbegrenzungsventil (52) aufbringt.

## Revendications

1. Une valve de surpression (52) comprenant un corps de valve (54) pourvu d'un orifice d'entrée (58) et d'un orifice de sortie (60) pour évacuer de l'air à l'extérieur dudit corps de valve (54), l'orifice d'entrée (58) comprenant un siège de valve, comprenant une soupape à champignon munie d'une queue de soupape (64) possédant une première extrémité et une seconde extrémité à laquelle est fixé un premier obturateur (62), ledit premier obturateur (62) possédant une face frontale apte à venir en contact étanche avec ledit siège de valve, ladite soupape à champignon pouvant se déplacer axialement le long d'un axe de ladite queue de soupape (64) d'une position fermée, dans laquelle un premier joint d'obturateur (66) vient en contact avec ledit siège de valve, à une position ouverte dans laquelle ledit premier obturateur (62) est éloigné axialement dudit siège de valve, comprenant un ressort de valve (68) qui pousse ladite soupape à champignon dans ladite position fermée, et comprenant un l'organe de levée (80) relié à ladite première extrémité de ladite queue de soupape (64), **caractérisée en ce que** ledit organe de levée (80) est en contact glissant avec ladite première extrémité de ladite queue de soupape (64), **en ce que** ledit organe de levée (80) possède une face frontale et est déplaçable d'une première position, dans laquelle ladite face frontale est en contact avec ledit orifice de sortie (60), à une seconde position dans laquelle ledit organe de levée (80) est espacé dudit orifice de sortie (60) et est en contact avec un organe d'arrêt (86) disposé sur la première extrémité de la queue de soupape (64), et **en ce que** ledit organe de levée (80) peut également se déplacer vers une troisième position dans laquelle ledit organe de levée (80) est appliqué contre l'organe d'arrêt (86) et éloigne ladite queue de soupape (64) axialement dudit siège de valve.

2. La valve de surpression de la revendication 1, dans laquelle ledit orifice d'entrée (58) est plus petit en superficie que ledit orifice de sortie (60).

3. La valve de surpression de la revendication 1, dans laquelle, dans ladite seconde position, ledit organe de levée (80) est espacé dudit orifice de sortie (60) d'une distance de 0,05 à 0,09 cm (0,020 à 0,035 pouce).

4. La valve de surpression de la revendication 1, dans laquelle ledit organe d'arrêt (86) comprend un organe de fixation fileté pouvant se déplacer le long de ladite queue de soupape (64), de sorte que la distance de laquelle ledit organe de levée (80) est espacé dudit orifice de sortie (60) dans ladite seconde position est variable.

5. La valve de surpression de la revendication 1, dans laquelle ledit premier obturateur (62) possède une face résiliente.

6. La valve de surpression de la revendication 1, dans laquelle ledit organe de levée est pourvu d'un évidement (96) ménagé dans sa surface supérieure.

7. La valve de surpression de la revendication 1, dans laquelle ledit organe de levée (80) comprend un organe en forme de disque pourvu d'un orifice central et d'une surface supérieure, ladite queue de soupape traversant ledit orifice central et se terminant par un organe d'arrêt (86), ledit organe d'arrêt possédant une surface inférieure (92), la surface inférieure (92) dudit organe d'arrêt (86) et la surface supérieure audit organe de levée définissant un interstice prédéterminé (90).

8. La valve de surpression de la revendication 7, dans laquelle ledit organe d'arrêt (86) possède une dimension en épaisseur et l'organe de levée (80) est pourvu d'un évidement (96) ménagé dans sa surface supérieure, ledit évidement (96) possédant une profondeur au moins égale à la dimension en épaisseur dudit organe d'arrêt (86) majorée dudit interstice prédéterminé (90), ledit organe d'arrêt (86) étant en toutes circonstances entièrement logé à l'intérieur dudit évidement (96).

9. Un toboggan d'évacuation gonflable (16) comprenant une pluralité de tubes porteurs gonflables aptes à être déployés à partir d'une surface porteuse haute vers une surface porteuse basse, comprenant une valve de surpression (52) conforme à l'une des revendications 1 à 8 fixée à une ouverture ménagée dans au moins un de ladite pluralité de tubes porteurs gonflables, de façon que ledit orifice d'entrée (58) débouche dans ledit un de ladite pluralité de tubes porteurs gonflables.

10. Toboggan d'évacuation gonflable selon la revendication 9, lequel est rangé dans un compartiment avant son déploiement, ledit toboggan d'évacuation exerçant alors une charge de compression sur ladite valve de surpression (52).
